# EUROPÄISCHE PATENTANMELDUNG

(11) **EP 1 114 747 A1**
(43) Veröffentlichungstag der Anmeldung: **11.07.2001**
(21) Anmeldenummer: 00811218.7
(22) Anmeldetag: 21.12.2000
(51) Int. Cl.: B60P 1/44, B62D 33/03

(54) **Platten, insbesondere Bordwand für Fahrzeuge**

(30) Priorität: 07.01.2000 DE 10000411
(71) Anmelder: Alusuisse Technology & Management AG, 8212 Neuhausen am Rheinfall (CH)
(72) Erfinder: Kemen, Hans-Jörgen, 78224 Singen (DE); Bank, Werner, 78315 Radolfzell (DE)

(57) **Zusammenfassung**

Bei einer Plattform, die insbesondere als überfahrbare Bordwand oder Rücklade schwenkbar an einem Fahrzeug angebracht ist und eine Fläche bildende Plattformprofile sowie wenigstens ein an der fahrzeugseitigen Plattformkante angebrachtes Anschlusselement (40) zum Verbinden der Plattform mit dem Fahrzeug oder einem entsprechenden Schwenkpartner enthält, weist das Anschlusselement (40) zum einen ösenähnlich ausgebildeten Abschnitt (48) mit einem Durchbruch (42) zur Aufnahme einer Gelenkwelle (44) des einen Schwenkpartners auf sowie zum anderen einen angeformten leistenartigen Einschubabschnitt (46,48,49,49a), der formschlüssig am anderen Schwenkpartner anbringbar ausgebildet ist. Zudem bietet das Anschlusselement (40) an einem Einschubhals (46) eine Einsteckleiste (48) mit wenigstens einer Querrippe (49,49a) an, deren Breite größer ist als die Breite des Einschubhalses.

## Beschreibung

Die Erfindung betrifft eine Plattform -- insbesondere eine schwenkbar an einem Fahrzeug angebrachte überfahrbare Bordwand, die auch als Rückladen bezeichnet wird -- mit eine Fläche bildenden Plattformprofilen sowie mit wenigstens einem an der fahrzeugseitigen Plattformkante angebrachten Anschlusselement zum Verbinden der Plattform mit dem Fahrzeug oder einem entsprechenden Schwenkpartner.

Durch die EP 0 081 115 A1 ist eine einseitig anhängbare Fahrzeug-Hubwand bekannt mit trogförmigem Anschlussprofil, das an seiner offenen Seite von den Enden der längsliegenden Plattformprofile abgedeckt und mit abkragenden Anschlusslaschen ausgerüstet ist. Letztere nehmen in Bohrungen oder Augen zum einen die Fahrzeug-Hubwand haltende Gelenkbolzen auf sowie zum anderen Teile einer hydraulischen Hubeinrichtung. Es ist zudem vorgesehen, das trogförmige Anschlussprofil mittels Schrauben an den Enden der Plattformprofile festzulegen. Diese Konstruktion ist bei stranggepressten Leichtmetall-Hohlprofilen nicht verwendbar; bei solchen bekannten Ladebordwänden werden -- jene Anschlusslaschen aufweisende -- Anschlussblöcke angeschweißt. Übliche Anschlussblöcke aus Stahl werden an den Leichtmetall-Hohlprofilen durch Verbindungsorgane gehalten.

In Kenntnis dieses Standes der Technik hat sich der Erfindung das Ziel gesetzt, eine Bordwand bzw. einen Rückladen der eingangs erwähnten Art so zu verbessern, dass die Anschlussorgane ohne großen mechanischen Aufwand günstig hergestellt und möglichst universell eingesetzt werden können; zudem soll eine umfangreiche Lagerhaltung verschiedenartiger Anschlussorgane vermieden werden.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß weist das Anschlusselement zum einen einen ösenähnlich ausgebildeten Abschnitt mit einem Durchbruch zur Aufnahme einer Gelenkwelle des einen Schwenkpartners auf sowie zum anderen einen angeformten leistenartigen Einschubabschnitt, der formschlüssig am anderen Schwenkpartner angebracht werden kann. Nach einem weiteren Merkmal der Erfindung soll das Anschlusselement an einem Einschubhals eine Einsteckleiste mit wenigstens einer Querrippe enthalten, deren Breite größer ist als die Breite des Einschubhalses. Als günstig hat es sich erwiesen, die Einsteckleiste beidseits zu stufen und so zumindest zwei Querrippen unterschiedlicher Breite entstehen zu lassen; die dem Durchbruch fern liegende Querrippe ist dabei von geringerer Breite als die dem Einschubhals benachbarte Querrippe.

Die beschriebene erfindungsgemäße Ausgestaltung des Querschnittes der Einschub- oder Einsteckleiste des Anschlusselementes soll dem Querschnitt einer hinterschnittenen Längsnut in einem fahrzeugseitig festzulegenden Aufnahmeprofil entsprechen, in welcher die Einsteckleiste in Gebrauchsstellung sitzt.

Um den Sitz des Anschlusselementes in der Längsnut weitergehend zu verbessern, ist dieses beidseits seines Einschubhalses mit Mulden ausgestattet, in welche in Gebrauchsstellung beidseits der Längsnut vorhandene Anformungen eingreifen.

Vorteilhafterweise soll der Querschnitt der Einsteckleiste des Anschlusselementes zudem so gestaltet sein wie die hinterschnittene Längsnut in einem plattformseitig festzulegenden Anschlusskopf.

Das erfindungsgemäße Anschlusselement wird in zwei unterschiedlichen Versionen zum Einsatz gebracht, zum einen als ein über die Breite der Plattform verlaufendes Profil, aus dessen Gelenkkopf Randausnehmungen ausgeschnitten sind, die sich in Richtung der Gelenkachse erstrecken und deren Länge etwa der Länge von vorspringenden Gelenkabschnitten des Schwenkpartner entsprechen. Hierbei muss ein genaues Gesamtmaß eingehalten werden.

Zum anderen hat es sich als günstig erwiesen, die Länge des Anschlusselementes der Länge der einzelnen Randausnehmungen des Schwenkpartners anzupassen mit dem Vorteil, durch einfaches Ablängen die problemlos einzubauenden Teile zu erhalten, die jeweils in der Art eines Kulissensteins in die hinterschnittene Längsnut eingeschoben zu werden vermögen.

Insbesondere bei der zuletzt erörterten Ausgestaltung hat es sich als sinnvoll erwiesen, das Anschlusselement mit dem fahrzeugseitig festzulegenden Aufnahmeprofil oder dem plattformseitigen Anschlusskopf kraftschlüssig zu verbinden, beispielsweise zu verschweißen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: einen Längsschnitt durch eine überfahrbare Bordwand, die einends einen Anschlussbereich für die Ladefläche eines nicht dargestellten Fahrzeuges mit einem Durchbruch für eine Gelenkwelle aufweist;
- Fig. 2:: die Draufsicht auf den fahrzeugzseitigen Endbereich der anzulenkenden Bordwand;
- Fig. 3:: den vergrößerten Schnitt durch den Endbereich gemäß Linie III -III der Fig. 2;
- Fig. 4:: einen Schnitt durch den Anlenkbereich der Bordwand mit einem Anschlusselement zwischen dieser und einem Fahrzeug;
- Fig. 5:: ein teilweise geschnittenes Detail des Anlenkbereiches;
- Fig. 6:: eine andere Ausführung zu dem Detail der Fig. 5;
- Fig. 7:: das Anschlusselement der Fig. 4 mit Einschubleiste für ein fahrzeugseitiges Aufnahmeprofil in teilweise geschnittener Seitenansicht;
- Fig. 8, 11:: die jeweils teilweise geschnittene Draufsicht auf einen Abschnitt des Anschlusselementes mit Aufnahmeprofil nach Fig. 7 bzw. Fig. 10;
- Fig. 9:: die vergrößerte Stirnansicht des Anschlusselementes;
- Fig. 10:: eine der Fig. 7 etwa entsprechende Darstellung einer anderen Paarung aus Anschlusselement und Aufnahmeprofil.

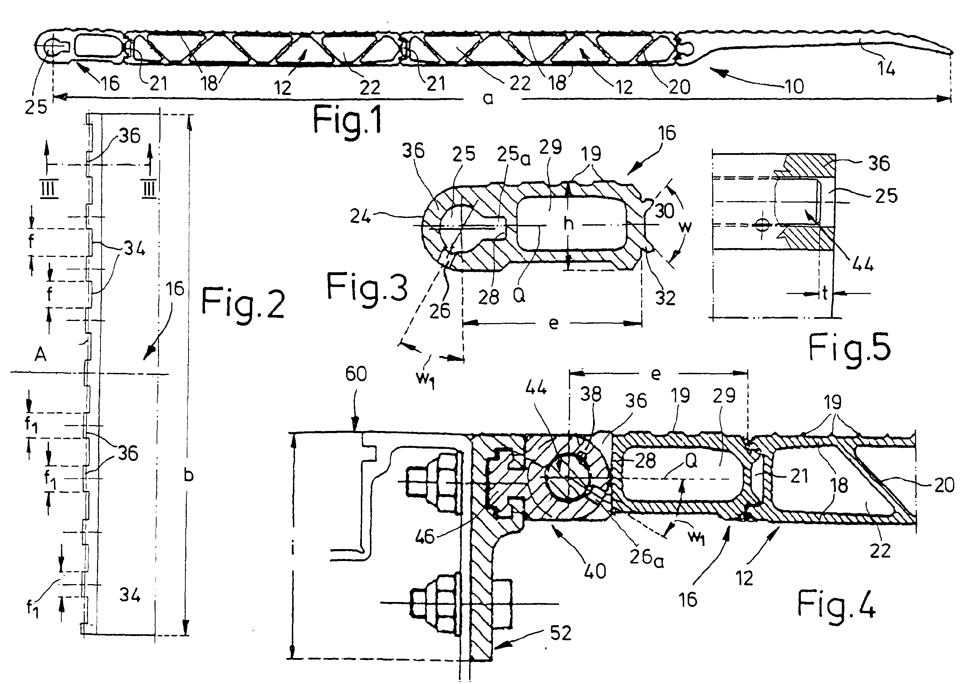

Eine in Fig. 1 im Längsschnitt angedeutete -- auch als Rückladen zu bezeichnende -- Bordwand 10 einer wirksamen Länge a von 815 mm und einer wählbaren Breite b von hier etwa 2.500 mm besteht in der gewählten Ausführung aus zwei Plattformprofilen 12, einer heckwärtigen Auffahrzunge 14 sowie einem -- zu einem nicht weiter dargestellten Fahrzeugaufbau gerichteten -- Anschlußkopf 16. Die Plattformprofile 12 sind aus einer Aluminiumlegierung stranggepresste Hohlkammerprofile mit jeweils zwei in Abstand parallelen Profilwänden 18, welche durch geneigte Formstege 20 verbunden sind und Profilkammern 22 begrenzen. An die Außenfläche der oberen Profilwand 18 -- und auch an die entsprechende Oberfläche des Anschlusskopfes 16 -- sind als Rutschsicherung Querrippen 19 angeformt.

Der Anschlusskopf 16 der Höhe h von etwa 30 mm besteht aus einem Strangpressprofil etwa rechteckigen Querschnitts mit einerseits -- in Fig. 3 links -- teilkreisförmig gerundetem Querschnittsende 24, in dem ein Scharnierkanal 25 aus einem kreisförmigen Abschnitt sowie einem in Querschnittslängsachse Q des Anschlusskopfes gerichteten rechteckigen Kanalabschnitt 25ₐ verläuft: vom kreisförmigen Kanalabschnitt geht eine in einem 30°-Winkel w₁ von einer senkrechten Diametralen geneigte Radialbohrung 26 aus. Dem rechteckigen Kanalabschnitt 25ₐ ist jenseits einer Querwand 28 eine querschnittlich rechteckige Kammer 29 zugeordnet.

Von dem in Fig. 3 rechten Querschnitts- oder Stirnende 30 des Anschlusskopfes 16 ragen zwei in einem Winkel w von etwa 90° nach außen gestellte Leisten 32 ab, dank deren der Anschlusskopf 16 in einem entsprechend hinterschnittenen Stirnraum 21 des benachbarten Plattformprofils 12 festgelegt wird. Der Abstand e jenes in Fig. 3 rechten Stirnendes 30 von der Gelenkachse A des Scharnierkanals 25 misst 65 mm.

In das Strangpressprofil des Anschlusskopfes 16 sind zur Aufnahme entsprechend gestalteter Gelenkorgane zur Gelenkachse A parallele Randausnehmungen 34 eingebracht, welche die zinnenförmige Draufsicht am linken Rand der Fig. 2 erzeugen; die axiale Länge f dieser Randausnehmungen 34 beträgt 165 mm, die entsprechende Länge f₁ der zwischen den Randausnehmungen 34 verbleibenden Gelenkabschnitte 36 des Querschnittsendes 24 von Anschlusskopf 16 hier 167 mm.

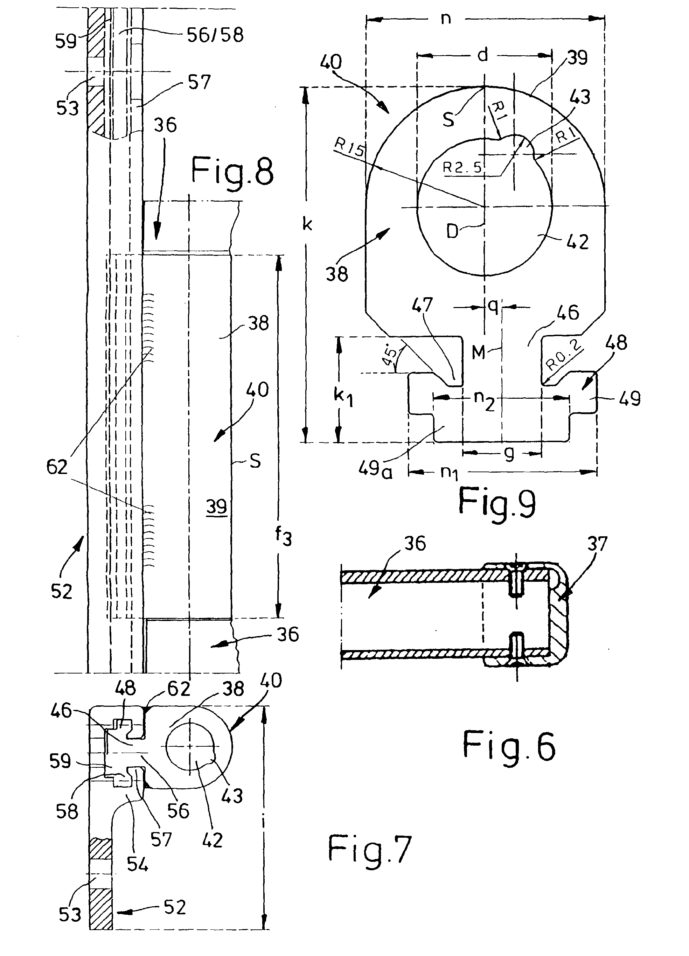

Die soeben erwähnten Gelenkorgane sind ösenartige Abschnitte oder Gelenkköpfe 38 eines Anschluss- oder Einschubelementes 40, deren -- ebenfalls mit einer Radialbohrung 26ₐ Neigungswinkel w₁ ausgestatteter -- Gelenkdurchbruch 42 zusammen mit dem fluchtenden Scharnierkanal 25 von einer Gelenkwelle 44 durchsetzt wird, deren Längsachse mit der Gelenkachse A zusammenfällt. Die Gelenkwelle 44 endet -- wie Fig. 5 zeigt -- bevorzugt im Abstand t vom Stirnende des randwärtigen Gelenkabschnittes 36, der im übrigen gemäß Fig. 6 mittels eines Deckels 37 verschlossen sein kann.

Das mit dem Gelenkdurchbruch 42 für die Gelenkwelle 44 des Durchmessers d von hier 17 mm versehene Anschluss- oder Einschubelement 40 einer gesamten Querschnittslänge k von 44 mm und der Breite n von 30 mm seines Gelenkkopfes 38 -- ist an seinem fahrzeugseitigen Ende mittels eines Einschubhalses 46 der Breite g von 10 mm an eine Einschub- oder Einsteckleiste 48 angeformt, die eine Querrippe 49 der Breite n₁ von etwa 24 mm enthält. Diese ist an ihrer Außenfläche beidends gestuft, d. h. an die Querrippe 49 schließt endwärts ein Abschnitt 49ₐ geringerer Breite n₂ von 17 mm an. Die Länge k₁ des Querschnitts an der Mittellinie M von Einschubhals 46 und gestufter Querrippe 49, 49ₐ misst im übrigen hier etwa 13 mm.

Gemäß Fig. 9 ist die Mittellinie M von Einschubhals 46 und gestufter Querrippe 49, 49ₐ zur parallelen Durchmesserlinie D des Durchbruches 42 um ein Maß q von etwas mehr als 2 mm seitenversetzt. Zudem bietet -- des besseren Sitzes halber -- die Einsteckleiste 48 beiderseits des Einschubhalses 46 jeweils einen etwa dreiecksförmigen Querschnitt 47 als Aufnahmemulde für einen Vorsprung 57ₐ an der Nutkante 57 der Längsnut 56 an.

Eine in Fig. 7, 9 erkennbare Randeinformung an der Kontur des Durchbruches 42 ist außerhalb einer durch die erwähnte Durchmesserlinie D bestimmten Scheitellinie S angeordnet. Diese Scheitellinie S verläuft auf dem Zenit der querschnittlich teilkreisförmig gekrümmten Stirnfläche 39 des Gelenkkopfes 38.

Das beschriebene Einschub- oder Anschlusselement 40 kann -- wie oben geschildert -- als Profil an einem Stück mit von seiner Einsteckleiste 48 abragenden ösenartigen Abschnitten 38 der axialen Länge f₃ zum Einsetzen in die Randausnehmungen 34 gestaltet und verwendet werden; das Einschubelement 40 ist dann seinerseits in Draufsicht ebenfalls zinnenartig.

In Fig. 7, 8 dargestellt ist jedoch eine Ausführung, bei der von einem Einschubleistenprofil des beschriebenen Querschnitts Einschubelemente 40 gewünschter Länge f₃ abgelängt und in die Randausnehmungen 34 zwischen den Gelenkabschnitten 36 eingepasst werden (f₃ ist nur geringfügig kürzer als die Länge f der Randausnehmungen 34). Die Einschubelemente 40 sind hier einem Aufnahmeprofil 52 der Höhe i von 80 mm zugeordnet, das in einem Profilkopf 54 eine hinterschnittene Längsnut 56 mit gestuftem Hinterschneidungsraum 58 enthält; letzterer ist mit einer das Nutentiefste anbietenden Nutbodeneinformung 59 ausgestattet und so dem Querschnitt der Einsteckleiste 48, also von Querrippe 49 und deren gestuftem Abschnitt 49ₐ, angepasst, d. h. der beidends verkürzte Endabschnitt 49ₐ der Querrippe 49 kann -- zusätzlich Halt gebend -- in jene Nutbodeneinformung 59 eingreifen. Der Einschubhals 46 liegt in Endstellung beidseits den äußeren Nutkanten 57 der Längsnut 56 auf. Sind die Einschubelemente 40 der Länge f₃ sowohl an der Gelenkwelle 44 als auch in der Längsnut 56 angeordnet, werden sie oben und unten durch Schweißpunkte 62 angeheftet.

Jenes Aufnahmeprofil 52 ist in Fig. 4 bündig an der bei 60 angedeuteten Ladefläche eines Fahrzeuges angebracht und mit diesem verschraubt; die Schraublöcher dafür sind in der Zeichnung mit 53 bezeichnet.

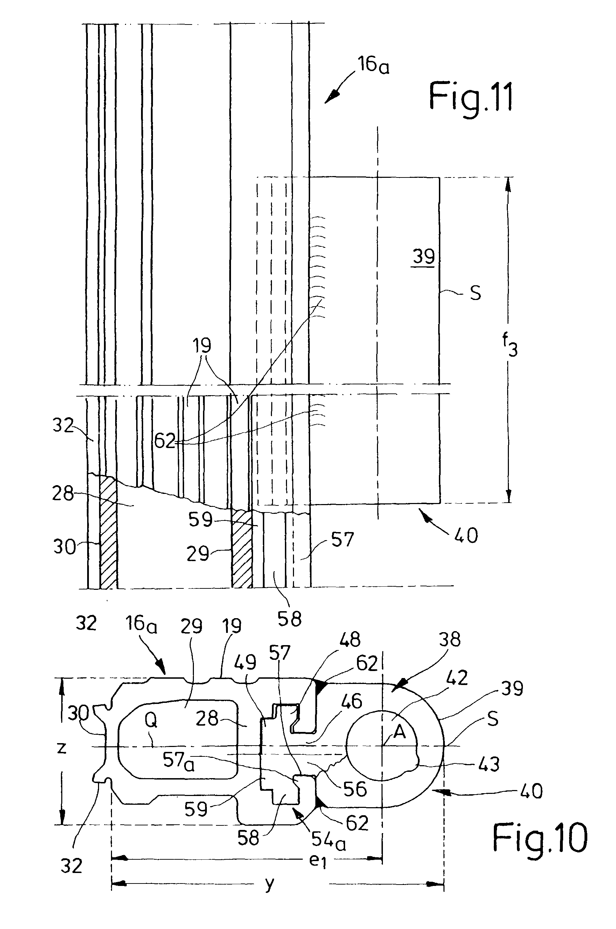

Den Fig. 10, 11 ist eine Paarung aus einem Anschlusskopf 16ₐ und einem Einschubelement 40 zu entnehmen; auch bei diesem Anschlusskof 16ₐ ragen von dem Querschnittsstirnende 30 die beiden voneinander weg weisenden Anschlussleisten 32 ab, und innerhalb des Querschnittes ist die Kammer 29 angeordnet. Letztere ist durch die Querwand 28 an einem entsprechend dem Profilkopf 54 der Fig. 7 gestalteten Profilkopf 54ₐ der Höhe z von etwa 36 mm mit hinterschnittener Längsnut 56 angefügt; in diesem Profilkopf 54ₐ wird der Einsatzabschnitt 38 in beschriebener Art festgelegt. Der Abstand y der an der querschnittlich teilkreisförmigen Stirnfläche 39 des Gelenkkopfes 38 verlaufenden Scheitellinie S zum Querschnittsstirnende 30 des Abschlusselementes 16ₐ beträgt 80 mm, der Abstand e₁ dieses Querschnittsstirnendes 30 zur Gelenkachse A hier 65 mm.

## Patentansprüche

1. Plattform, insbesondere schwenkbar an einem Fahrzeug angebrachte/r überfahrbare/r Bordwand oder Rückladen, mit eine Fläche bildenden Plattformprofilen sowie mit wenigstens einem an der fahrzeugseitigen Plattformkante angebrachten Anschlusselement zum Verbinden der Plattform mit dem Fahrzeug oder einem entsprechenden Schwenkpartner,
dadurch gekennzeichnet,
dass das Anschlusselement (40) zum einen einen ösenähnlich ausgebildeten Abschnitt (38) mit einem Durchbruch (42) zur Aufnahme einer Gelenkwelle (44) des einen Schwenkpartners aufweist sowie zum anderen einen angeformten leistenartigen Einschubabschnitt (46, 48, 49, 49ₐ), der formschlüssig am anderen Schwenkpartner anbringbar ausgebildet ist.

2. Plattform nach Anspruch 1, dadurch gekennzeichnet, dass das Anschlusselement (40) an einem Einschubhals (46) eine Einsteckleiste (48) mit wenigstens einer Querrippe (49, 49ₐ) aufweist, deren Breite (n₁, n₂) größer ist als die Breite (g) des Einschubhalses.

3. Plattform nach Anspruch 2, dadurch gekennzeichnet, dass die Einsteckleiste (48) beidseits gestuft ist und zumindest zwei Querrippen (49, 49ₐ) unterschiedlicher Breite (n₁, n₂) aufweist.

4. Plattform nach Anspruch 2 oder 3, dadurch gekennzeichnet, dass die dem Durchbruch (42) fern liegende Querrippe (49ₐ) von geringerer Breite (n₁) ist als die dem Einschubhals (46) benachbarte Querrippe (49).

5. Plattform nach einem der Ansprüche 2 bis 4, dadurch gekennzeichnet, dass die Mittellinie (M) für den Einschubhals (46) und die von diesem beidseits abkragende Einsteckleiste (48) zur parallelen Diametrallinie (D) des Durchbruches (42) um ein Maß (q) seitenversetzt ist.

6. Plattform nach einem der Ansprüche 1 bis 5, dadurch gekennzeichnet, dass der Querschnitt der Einsteckleiste (48) des Anschlusselementes (40) dem Querschnitt einer hinterschnittenen Längsnut (56) in einem fahrzeugseitig festzulegenden Aufnahmeprofil (52) entspricht.

7. Plattform nach einem der Ansprüche 1 bis 5, dadurch gekennzeichnet, dass der Querschnitt der Einsteckleiste (48) des Anschlusselementes (40) einer hinterschnittenen Längsnut (56) in einem plattformseitig festzulegenden Anschlusskopf (16ₐ) entspricht.

8. Plattform nach Anspruch 6 oder 7, dadurch gekennzeichnet, dass die Längsnut (56) von Nutkanten (57) begrenzt ist, die mit jeweils einem querschnittlichen Vorsprung (57ₐ) in eine den Einschubhals (46) flankierende Mulde (47) der Einsteckleiste (48) eingreifen.

9. Plattform nach einem der Ansprüche 1 bis 8, dadurch gekennzeichnet, dass das Anschlusselement (40) ein über die Breite (b) der Plattform (12) verlaufendes Profil ist, wobei aus seinem Gelenkkopf (38) Randausnehmungen ausgeschnitten sind, die sich in Richtung der Gelenkachse (A) erstrecken und deren Länge etwa der Länge (f₁) von vorspringenden Gelenkabschnitten (36) des Schwenkpartners entsprechen.

10. Plattform nach einem der Ansprüche 1 bis 8, dadurch gekennzeichnet, dass die Länge (f₃) des Anschlusselementes (40) der Länge (f) von Randausnehmungen (34) des Schwenkpartners entspricht.

11. Plattform nach Anspruch 6 oder 10, dadurch gekennzeichnet, dass das Anschlusselement (40) in der Art eines Kulissensteins in der hinterschnittenen Längsnut (56) angeordnet ist.

12. Plattform nach einem der Ansprüche 1 bis 11, insbesondere nach Anspruch 10 oder 11, dadurch gekennzeichnet, dass das Anschlusselement (40) mit dem fahrzeugseitig festzulegenden Aufnahmeprofil (52) oder dem plattformseitigen Anschlusskopf (16a) kraftschlüssig verbunden, beispielsweise verschweißt, ist.
